# EUROPÄISCHE PATENTSCHRIFT

(11) **EP 0 532 460 B1**
(45) Veröffentlichungstag und Bekanntmachung des Hinweises auf die Patenterteilung: **30.10.1996**
(21) Anmeldenummer: 92810652.5
(22) Anmeldetag: 26.08.1992
(51) Int. Cl.: H02G 3/04

(54) **Kabelträger für Installationen in Gebäuden**
Cable holder for building installations
Support de câbles pour installation dans les bâtiments

(30) Priorität: 07.09.1991 CH 2629/91; 24.06.1992 CH 1986/92
(43) Veröffentlichungstag der Anmeldung: 17.03.1993
(73) Patentinhaber: LANZ OENSINGEN AG, 4702 Oensingen (CH)
(72) Erfinder: Mühlethaler, Erhard, CH-3314 Schalunen (CH)
(74) Vertreter: OK pat AG

(56) Entgegenhaltungen:
- DE-B- 2 141 849
- GB-A- 1 581 552

## Beschreibung

Die Erfindung betrifft einen Kabelträger nach dem Oberbegriff des Patentanspruchs 1.

Derartige Kabelträger werden insbesondere für die Verlegung von elektrischen Kabeln aller Art in Verwaltungs-, Gewerbe- und Industriebauten verwendet. Bekannt sind einerseits sogenannte Gitterbahnen, die aus abgewinkelten, geschweissten Drahtgittern hergestellt sind, und anderseits Kabelbahnen aus gelochtem und abgekantetem Blech. Beide sind nur für Kabel von relativ geringem Gewicht geeignet, wobei Gitterbahnen gegenüber den den Kabelbahnen besser durchlüftet und installationsfreundlicher sind, da die Kabel an beliebigen Stellen des Bodens oder der Seitenwände durch die Gitteröffnungen geführt werden können. Gitterbahnen (aus miteinander verschweissten Drähten von z.B. 4 mm Durchmesser) sind allerdings in Längs- und Querrichtung wenig belastbar und im allgemeinen nicht verwindungssteif. Bei der Herstellung von lochgestanzten Kabelbahnen aus verzinktem Stahlblech entsteht anderseits je nach Lochanordnung ein Materialabfall von bis zu 40 %. Ausserdem sind die Lochränder scharfkantig und müssen beim Durchführen von Kabeln zwecks Vermeidung von Kabelverletzungen mit Tüllen versehen oder sonstwie "gepolstert" werden. Auch diese Kabelbahnen sind in Querrichtung nicht hoch belastbar.

Für grosse und schwere Kabel werden sogenannte Kabelpritschen verwendet, deren Boden aus in Abständen angeordneten Querstäben in Form von C-Profilen aus verzinktem Stahl besteht, die mit den durchgehenden Seitenwänden durch Punkt- oder Nahtschweissung oder Nieten miteinander verbunden sind. Sie bieten so eine ausreichende Kühlung der Kabel, wie sie bei Kabelbahnen selbst mit grossen Ausstanzungen nicht erreicht würde. Ausserdem sind Kabelpritschen in Längs- und Querrichtung weit höher belastbar als Gitterbahnen und Kabelbahnen, so dass sie auch grosse, schwere Kabel aufzunehmen vermögen. Da bei den im Handel erhältlichen Kabelpritschen die Querstäbe normalerweise in einem Abstand von etwa 300 mm voneinander angeordnet sind, sind sie nicht für dünnere, flexible Kabel geeignet, da derartige Kabel infolge der grossen Zwischenräume im Kabelpritschenboden durchhängen würden. - Insgesamt müssen bisher also mindestens drei Arten von Kabelträgern nebeneinander verwendet werden (Stand der Technik gemäss Katalog "Kabelträgersysteme" der Lanz Oensingen AG, CH-4702 Oensingen, Januar 1989). Dies führt bereits bei der Planung von Kabeltrassen zu bedeutendem Aufwand, der sich bei der Herstellung,. dem Transport, der Lagerung und der Montage weiter fortsetzt.

Aus der DE-2 141 849 sind Kabelpritschen bekannt, die bezüglich der Aufnahme von und Belastung durch Kabel von verschiedenen Durchmessern und Gewichten anpassungsfähig sind. Diese Kabelpritschen weisen wie üblich einen Boden und zwei Seitenwände auf. Die Seitenwände sind als gitterartige Strukturen ausgebildet und weisen L-förmige Profile auf. Der Boden besteht aus in gegenseitigem Abstand angeordneten Querstäben, deren seitliche Enden so verformt sind, dass sie sich zur Verbindung mit den Seitenwänden eignen. Die Querstäbe sind über diese Enden mit den horizontal gegeneinander gerichteten Schenkeln der L-förmigen Profile verbunden, und zwar mittels lösbarer Schrauben. Damit soll bezweckt werden, dass die Seitenwände und die Querstäbe bei gelösten Schrauben so gegeneinander verschwenkt werden können, dass die Querstäbe annähernd parallel zu den Seitenwänden verlaufen und die Seitenwände nur noch einen geringen Abstand aufweisen. Auf diese Weise soll das Transportvolumen der Kabelpritsche verringert werden.

Diese vorbekannte Kabelpritsche weist mehrere Nachteile auf. So ist das Transportvolumen von mehreren Elementen der Kabelpritsche auch im gewissermassen zusammengeklappten Zustand grösser als die Summe der Volumen mehrerer nicht vormontierter Seitenträger und Querstäbe. Ausserdem besteht die Gefahr des Verlustes von Schrauben. Besonders ungünstig ist aber, dass durch die gewählte Art der Schraubenverbindung und insbesondere durch das Anziehen und Lösen der Schrauben der Oberflächenschutz der Seitenwände und Querstreben beschädigt wird.

Der Erfindung liegt somit die Aufgabe zugrunde, einen Kabelträger der eingangs genannten Art vorzuschlagen, der die vorstehend erwähnten Nachteile nicht aufweist.

Diese Aufgabe wird erfindungsgemäss durch die Merkmale des kennzeichnenden Teils des Patentanspruchs 1 gelöst. Verschiedene bevorzugte Weiterbildungen und'Ausführungsformen des erfindungsgemässen Kabelträgers sind durch die abhängigen Patentansprüche definiert.

Nach der Erfindung wird die Verbindung der Seitenwände mit den Querstäben durch eine Stauchpress-Umformung erzeugt, welche nicht zerstörungsfrei lösbar ist und den Oberflächenschutz der zu verbindenden Teile nicht beschädigt.

Die Stauchpress-Umformung kann an den zu verbindenden Teilen selbst oder an zusätzlichen Elementen wie zum Beispiel an Nieten erfolgen.

Mit der Erfindung werden insbesondere die nachstehenden Vorteile erzielt:
- Dank der besonderen Fügeverbindung erfordert das fertige Produkt keinerlei Nachbehandlung und ist deshalb - im Vergleich etwa mit dem Schweissen - besonders geeignet; diese Verbindung lässt sich mit geringen Einrichtungskosten und kurzen Taktzeiten herstellen.
- Verglichen mit den bekannten Kabelpritschen und deren schweren Sprossen können relativ dünne Querstäbe, jedoch in entsprechend wesentlich geringeren Abständen verwendet werden. Dadurch ist der Kabelträger stabil und sowohl für dünne, leichtere, als auch für dicke, schwerere Kabel gleich gut geeignet und er kann universell angewendet werden. An die Stelle der drei verschiedenen vorstehend beschriebenen, bekannten Produkte (Gitterbahnen, Kabelbahnen, Kabelpritschen) tritt also allein der erfindungsgemässe Kabelträger. Hierdurch ergeben sich beim Planer, beim Hersteller wie auch beim Anwender erhebliche Kosteneinsparungen und eine -wesentlich vereinfachte, einheitliche Montage.
- Da der Boden des Kabelträgers nicht als "Gitter" mit Längsstäben o.dgl. ausgebildet ist unterscheiden sich verschieden breite Träger einzig in der Länge ihrer Querstäbe. Die Fertigung von Kabelträgern unterschiedlicher Breite und mit verschiedenen Querstab-Abständen kann also äusserts rationell mit immer den gleichen Einrichtungen und mit kurzen Umrichtzeiten erfolgen.
- Da nach der Endmontage der Oberflächenschutz nicht erneuert werden muss (kein Verzinken oder Tauchlackieren der sperrigen, langen Objekte), können Seitenwände und Querstäbe getrennt mit entsprechend geringem Volumen transportiert und erst in "Marktnähe" bzw. am Ort der Verwendung zum Endprodukt zusammengefügt werden. Dadurch werden Transport- und Lagerkosten gespart und eine hohe Anpassungsfähigkeit bei der Fertigung erreicht.
- Eine leicht V-förmige Ausgestaltung des Kabelträgerquerschnittes ermöglicht das Stapeln von Kabelträgern gleicher Breite, was sich bei Fertigung, Lagerung und Transport günstig auswirkt.
- Eine Befestigung der Querstäbe mittels Mehrfach-Klemmbügel hat den Vorteil, dass damit während der Endfertigung eine besondere Vorrichtung zur Halterung der Querstäbe in bestimmten, gleichen Abständen entfällt.
- Gemäss einer besonderen Ausführungsform sind nach oben geknickte oder gewölbte Querstäbe bei gleichzeitiger Anordnung von Zugorganen zwischen den Seitenwänden vorgesehen, wodurch eine hohe Tragfähigkeit auch in Querrichtung bei grösseren Kabelträgerbreiten erreicht wird.
- Alle Ausführungsformen sind frei von scharfen Lochrändern bzw. Stanzgräten, die Kabelverletzungen verursachen könnten; somit werden keinerlei Tüllen oder andere Polsterungen benötigt.

Im folgenden wird die Erfindung anhand mehrerer Ausführungsbeispiele in Verbindung mit der Zeichnung näher erläutert. Es zeigen:
Fig. 1 einen Querschnitt des erfindungsgemässen Kabelträgers in einer ersten, einfachen Ausführung mit geraden Querstäben,
Fig. 2 eine Draufsicht eines Teiles des Kabelträgers gemäss Fig. 1,
Fig. 3 eine durch Stauchpress-Umformung hergestellte Verbindung zwischen einem Querstab und einer Seitenwand des Kabelträgers in gegenüber den Fig. 1 und 2 vergrössertem Massstab,
Fig. 4 einen Teil eines Querschnittes des Kabelträgers in einer zweiten Ausführungsform mit abgekröpften Querstäben,
Fig. 5 einen Teil eines Querschnittes des Kabelträgers in einer dritten Ausführungsform mit dachartig geformten Querstäben,
Fig. 6 einen Teil eines Kabelträgers im Längsschnitt mit einer weiteren Art der Verbindung zwischen Querstäben und Seitenwänden,
Fig. 7 eine Draufsicht des Kabelträgers gemäss Fig. 6,
Fig. 8a einen Querschnitt entlang der Linie A-A und
Fig. 8b einen Querschnitt entlang der Linie B-B in Fig. 6,
Fig. 9a eine Teilansicht einer weiteren Ausführungsform der Querstäbe, und
Fig. 9b den Querschnitt des Querstabes nach Fig. 9a.

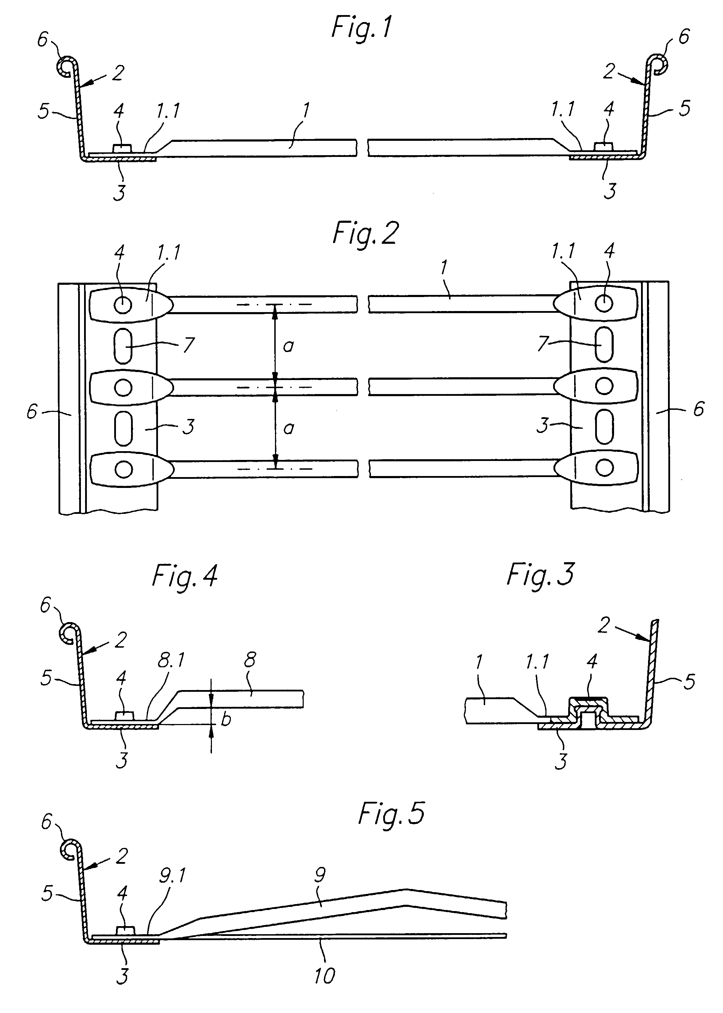

Beim Ausführungsbeispiel nach Fig. 1 - 3 bilden Querstäbe 1 den Boden des Kabelträgers. Die Querstäbe 1 bestehen beispielsweise aus galvanisiertem Rundstahl von 5 mm Durchmesser, deren Enden durch Quetschen bis auf eine Dicke von ca. 1,5 mm abgeplattet sind. Die Querstäbe 1 liegen mit den abgeplatteten Enden 1.1 auf horizontal gerichteten Schenkeln 3 von Seitenwänden 2 auf, die aus L-förmigen Profilen bestehen. Mit den Schenkeln 3 der Seitenwände 2 sind die Enden 1.1 mittels einer Stauchpress-Umformung unlösbar verbunden. Derartige Verbindungen können mit im Handel erhältlichen, einfachen Werkzeugen (z.B. der Firma TOX AG) durch Kaltumformung hergestellt werden, wobei dreh- und abzugsfeste Befestigungspunkte 4 (Fig.3) entstehen, ohne dass der ursprüngliche Oberflächenschutz der verbundenen Teile beschädigt wird. - Anstelle der dargestellten Verbindung können auch herkömmliche Stanznieten, Taumelnieten o.dgl. verwendet werden.

Damit leichtere, flexible Kabel am Boden des kanalartigen Kabelträgers nicht durchhängen, sind die Querstäbe 1 in relativ geringen Abständen a voneinander angeordnet. Die Abstände können umso grösser gewählt werden, je steifer die zu verlegenden Kabel sind, anderseits ist natürlich die Querstabilität des Kabelträgers u. a. durch die Anzahl Querstäbe pro Laufmeter bestimmt. In der Praxis erweist sich ein Abstand a von 50 mm als für die weitaus meisten Anwendungen geeignet. Der senkrecht gerichtete Schenkel 5 der vorzugsweise aus galvanisiertem Stahlblech gefertigten Seitenwände 2 schliesst mit dem horizontal gerichteten Schenkel 3 einen leicht stumpfen Winkel ein und ist an seinem oberen Ende eingerollt, wodurch ein Versteifungswulst 6 gebildet wird. Der durch den leicht stumpfen Winkel der Seitenwände 2 erzielte V-förmige Querschnitt des Kabelträgers ermöglicht das Stapeln von Kabelträgern gleicher Breite. Mindestens im horizontalen Schenkel 3 sind zwischen den Querstäben 1 Langlöcher 7 vorgesehen, die der Montage des Kabelträgers auf Wandauslegern o. dgl. dienen.

Gemäss Fig.4 sind Querstäbe 8 vorgesehen, deren Enden 8.1 wie die vorstehend beschriebenen Querstäbe 1 abgeplattet, jedoch ausserdem noch um ein Mass b in der Höhe abgekröpft sind. Das Mass b ist so gewählt, dass - vorwiegend bei vertikaler Verlegung angewendete - Befestigungsmittel für die Kabel auf den Querstäben (sogenannte Kabelbinder) nicht nach unten über die horizontalen Schenkel 3 der Seitenwände 2 vorstehen, so dass der Kabelträger auf einer Unterlage einwandfrei aufliegen kann. Die Verbindung zwischen den Querstäben und den Seitenwänden ist im übrigen wie vorstehend beschrieben ausgeführt (Fig. 3).

Beim Ausführungsbeispiel gemäss Fig.5 sind dachartig nach oben geknickte Querstäbe 9 vorgesehen, deren Enden 9.1 wie bei den vorstehend beschriebenen Querstäben 1 abgeplattet sind. Mit 10 sind Zugorgane bezeichnet, die in regelmässigen Abständen zwischen den Querstäben 9 angeordnet sind und die Seitenwände 2 miteinander verbinden. Die Zugorgane 10 sind beispielsweise Stahlblechstreifen, die, ebenfalls mittels der vorstehend beschriebenen Stauchpress-Umformung wie die Querstäbe 1, 8, 9, an den horizontalen Schenkeln 3 der Seitenwände 2 befestigt sind. Anstatt dachartig nach oben geknickt, können die Querstäbe 9 auch bogenförmig nach oben gewölbt sein. Durch diese Gestaltung wird eine hohe Quersteifigkeit auch bei grösserer Breite (längere Querstäbe) des Kabelträgers erreicht.

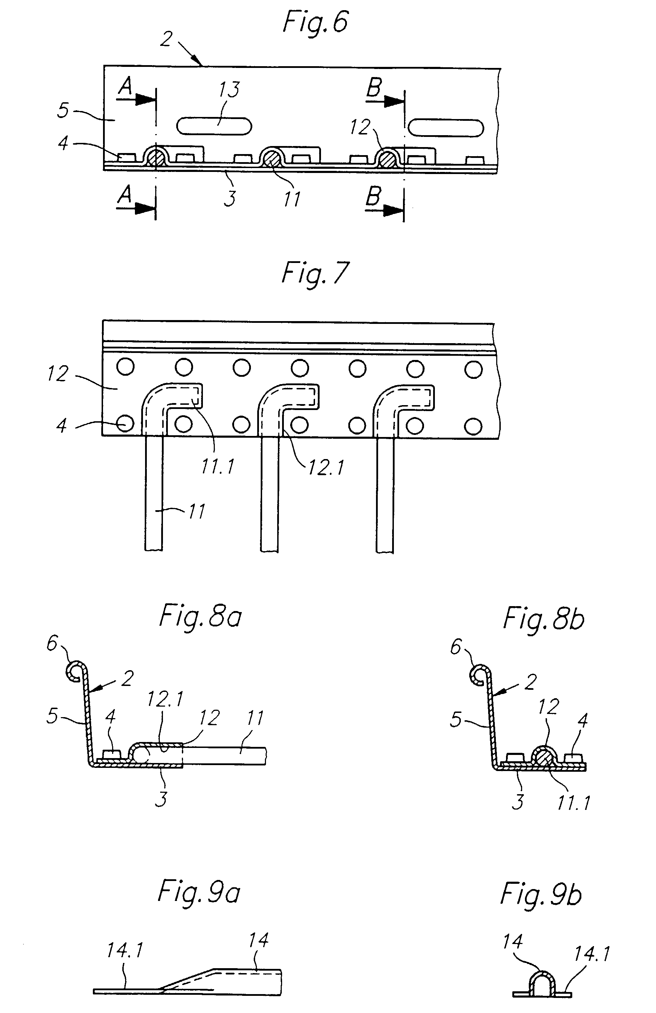

Beim weiteren Ausführungsbeispiel nach Fig. 6, 7, 8a, 8b sind Querstäbe 11 vorgesehen, die abgebogene Enden 11.1 aufweisen. Die Querstäbe 11 werden von Mehrfach-Klemmbügeln 2, z.B. in Form von galvanisierten Stahlblech-Streifen, auf den horizontalen Schenkeln 3 der Seitenwände 2 gehalten, wobei die abgebogenen Enden 11.1 in Ausprägungen 12.1 der Mehrfach-Klemmbügel 12 formschlüssig geführt und die Mehrfach-Klemmbügel 12 ihrerseits mittels der Stauchpress-Umformung an einer Mehrzahl von Stellen zwischen den Querstäben fest mit den horizontalen Schenkeln 3 verbunden sind. Die Enden der Querstäbe 11 sind beispielsweise um 90 Grad abgebogen, wobei jedoch je nach Anordnung der Befestigungspunkte 4 des Mehrfach-Klemmbügels 12 auch andere Abbiegungen vorteilhaft sein können. Denkbar ist ferner, abgeplattete Stabenden mit einem gestanzten Loch zu verwenden und die Klemmbügel (die Blechstreifen) 12 durch diese Löcher hindurch mit den Schenkeln 3 zu verbinden (nicht dargestellt).

Gemäss Fig. 6 sind in den senkrecht gerichteten Schenkeln 5 weitere Langlöcher 13 vorgesehen, die beispielsweise der Verbindung von in Längsrichtung aneinanderstossenden Kabelträgern dienen können. Die bei Kabelbahnen und Kabelpritschen bisher übliche Verbindungstechnik ist dadurch auch bei diesen Kabelträgern anwendbar.

Gemäss den Fig. 9a und 9b bestehen die Querstäbe aus einem U- oder V-Profil 14, das aus einem Stahlblechstreifen geformt ist, dessen Enden 14.1 jedoch flach belassen sind und der Verbindung mittels der Stauchpress-Umformung an den horizontalen Schenkeln 3 der Seitenwände 2 dienen.

Besondere, vorstehend beschriebene Merkmale, wie Abkröpfung b (Fig. 4), Wölbung und Zugverbindung (Fig. 5), Verwendung von Mehrfach-Klemmbügeln (Fig. 6 - 8) lassen sich natürlich weitgehend mit den verschiedenen Varianten von Querstäben 1, 8, 9, 11 und 14 kombinieren.

Es versteht sich, dass die für eine durchgehende Kabelverlegung in Gebäuden, Schächten, Tunneln usw. erforderlichen Formstücke wie Bögen, T-Stücke, Kreuzstücke, Abgänge usw. analog gefertigt werden können wie die vorstehend beschriebenen, geraden Kabelträger-Abschnitte.

Um bei der Kabelverlegung das Einziehen der Kabel auf dem Kabelträgerboden zu erleichtern, können die Querstäbe mit einem Gleitmittel versehen werden.

Bei den beschriebenen Konstruktionsvarianten besteht aufgrund des Fehlens von scharfen Kanten keine Gefahr, dass die Kabel beim Verlegen verletzt werden. Besonders vorteilhaft ist es auch, dass für alle Breiten des Kabelträgers immer dasselbe L-förmige Profil für die Seitenwände 2 verwendet werden kann. Selbstverständlich können aber für die Seitenwände verschiedene Wandhöhen und/oder Blechstärken erforderlich sein.

## Patentansprüche

1. Kabelträger für Installationen, insbesondere in Gebäuden, mit einem aus einem Boden und zwei Seitenwänden (2) gebildeten kanalartigen Querschnitt, wobei die Seitenwände (2) L-förmiqe Profile aufweisen und der Boden aus Querstäben (1,8,9,11,14) besteht, die an ihren verformten Enden (1.1,8.1,9.1,11.1,14.1) durch Verbindungen mit den horizontal gegeneinander gerichteten Schenkeln (3) der L-förmigen Profile verbunden sind,
**dadurch gekennzeichnet,** dass die Verbindungen als einen Oberflächenschutz der zu verbindenden Teile nicht zerstörende, unlösbare Stauchpress-Umformungen ausgebildet sind.

2. Kabelträger nach Anspruch 1,
**dadurch gekennzeichnet,**
dass die Querstäbe (1) einen runden Querschnitt aufweisen und an ihren Enden (1.1) abgeplattet sind.

3. Kabelträger nach Anspruch 1,
**dadurch gekennzeichnet,**
dass die Querstäbe (8) an ihren Enden (8.1) abgeplattet und um ein Mass (b) nach oben abgekröpft sind.

4. Kabelträger nach Anspruch 1,
**dadurch gekennzeichnet,**
dass die Querstäbe (9) nach oben geknickt oder gewölbt sind.

5. Kabelträger nach Anspruch 4,
**dadurch gekennzeichnet,**
dass die Seitenwände (2) ausser durch die Querstäbe (9) durch Zugorgane (10) miteinander verbunden sind.

6. Kabelträger nach Anspruch 5,
**dadurch gekennzeichnet,**
dass die Zugorgane aus Stahlblechstreifen bestehen.

7. Kabelträger nach Anspruch 1,
**dadurch gekennzeichnet,**
dass die Querstäbe (1, 8, 9) aus verzinktem Rundstahl bestehen.

8. Kabelträger nach Anspruch 1,
**dadurch gekennzeichnet,**
dass die Querstäbe (14) aus U- oder V-förmig profilierten Stahlblechstreifen bestehen, deren Enden (14.1) flach sind.

9. Kabelträger nach Anspruch 1,
**dadurch gekennzeichnet,**
dass die Stauchpress-Umformung kalt hergestellt ist.

10. Kabelträger nach Anspruch 2, 3 oder 8,
**dadurch gekennzeichnet,**
dass die Querstäbe (1, 8, 9, 14) mit ihren flachen Enden (1.1, 8.1, 9.1, 14.1) auf den horizontalen Schenkeln (3) der Seitenwände (2) aufliegen.

11. Kabelträger nach Anspruch 1,
**dadurch gekennzeichnet**,
dass die Querstäbe (11) einen runden Querschnitt und seitlich abgebogene Enden (11.1) aufweisen.

12. Kabelträger nach Anspruch 11,
**dadurch gekennzeichnet,**
dass die Querstäbe (11) an ihren Enden um einen Winkel von 90 grad abgebogen sind.

13. Kabelträger nach Anspruch 1,
**dadurch gekennzeichnet,**
dass die Querstäbe (11) von über den horizontalen Schenkeln (3) der Seitenwände (2) liegenden Mehrfach-Klemmbügeln (12) festgehalten sind, wobei die verformten Enden (11.1) in Ausprägungen (12.1) der Mehrfach-Klemmbügel (12) formschlüssig geführt und die Mehrfach-Klemmbügel (12) mittels Stauchpress-Umformung bzw. durch Nieten fest mit den horizontalen Schenkeln (3) verbunden sind.

14. Kabelträger nach Anspruch 1,
**dadurch gekennzeichnet,**
dass die Abstände (a) der Querstäbe der Flexibilität der leichtesten zu verlegenden Kabel angepasst sind.

15. Kabelträger nach Anspruch 1,
**dadurch gekennzechnet,**
dass die Seitenwände aus Stahlblech gefertigt sind und am oberen Rand ihrer senkrecht gerichteten Schenkel (5) einen Versteifungswulst (6) aufweisen.

16. Kabelträger nach Anspruch 15,
**dadurch gekennzeichnet,**
dass die senkrecht gerichteten-Schenkel (5) mit den horizontal gerichteten Schenkeln (3) einen leicht stumpfen Winkel einschliessen.

17. Kabelträger nach Anspruch 1,
**dadurch gekennzeichnet,**
dass die Querstäbe mit einem Gleitmittel versehen sind.

## Claims

1. A cable support for installations, particularly in buildings, having a channel-like cross-section formed from a base and two sidewalls (2), wherein the sidewalls (2) comprise L-shaped sections and the base consists of transverse bars (1, 8, 9, 11, 14) which are attached at their deformed ends (1.1, 8.1, 9.1, 11.1, 14.1) by joints to the limbs (3), which are aligned horizontally towards each other, of the L-shaped sections,
**characterised in that** the joints are constructed as upsetting press deformations which do not destroy the surface protection of the parts to be joined.

2. A cable support according to claim 1,
characterised in that
the transverse bars (1) have a round cross-section and are flattened at their ends (1.1).

3. A cable support according to claim 1,
characterised in that
the transverse bars (8) are flattened at their ends (8.1) and are bent off upwards by an extent (b).

4. A cable support according to claim 1,
characterised in that
the transverse bars (9) are kinked or arched upwards.

5. A cable support according to claim 4,
characterised in that
the sidewalls (2) are joined to each other by tension elements (10) as well as by the transverse bars (9).

6. A cable support according to claim 5,
characterised in that
the tension elements consist of sheet steel strips.

7. A cable support according to according to claim 1,
characterised in that
the transverse bars (1, 8, 9) consist of galvanised round steel.

8. A cable support according to claim 1,
characterised in that
the transverse bars (14) consist of sheet steel strips of U- or V-shaped section, the ends (14.1) of which are flat.

9. A cable support according to claim 1,
characterised in that
the upsetting press deformation is produced cold.

10. A cable support according to according to claims 2, 3 or 8,
characterised in that
the transverse bars (1, 8, 9, 14) rest with their flat ends (1.1, 8.1, 9.1, 14.1) on the horizontal limbs (3) of the sidewalls (2).

11. A cable support according to according to claim 1,
characterised in that
the transverse bars (11) have a round cross-section and ends (11.1) which are bent off laterally.

12. A cable support according to claim 11,
characterised in that
the transverse bars (11) are bent off at their ends by an angle of 90 degrees.

13. A cable support according to according to claim 1,
characterised in that
the transverse bars (11) are secured by multiple clamping straps (12) situated above the horizontal limbs (3) of the sidewalls (2), wherein the deformed ends (11.1) are guided with positive fit in shaped formations (12.1) in the multiple clamping straps (12), and the multiple clamping straps (12) are fixedly joined to the horizontal limbs (3) by means of upsetting press deformation or by rivetting.

14. A cable support according to claim 1,
characterised in that
the spacings (a) of the transverse bars are matched to the flexibility of the lightest cables to be laid.

15. A cable support according to claim 1,
characterised in that
the sidewalls are made of sheet steel and their vertically oriented limbs (5) have a stiffening bead (6) at their top edge.

16. A cable support according to claim 15,
characterised in that
the vertically oriented limbs (5) form a slightly obtuse angle with the horizontally oriented limbs (3).

17. A cable support according to claim 1,
characterised in that
the transverse bars are provided with a slip additive.

## Revendications

1. Support de câbles pour installations, notamment dans des bâtiments, possédant une section en forme de canal, formée d'un fond et de deux parois latérales (2), les parois latérales (2) présentant des profilés en forme de L et le fond étant composé de barreaux transversaux (1, 8, 9, 11, 14) qui sont réunis par des assemblages, au droit de leurs extrémités déformées (1.1, 8.1, 9.1, 11.1, 14.1), aux branches (3) des profilés en forme de L qui sont dirigées l'une vers l'autre dans la direction horizontale,
caractérisé en ce que les assemblages sont réalisés sous la forme de déformations à la presse à estamper, indémontables, et qui ne détruisent pas la protection superficielle des éléments à assembler.

2. Support de câbles selon la revendication 1,
caractérisé
en ce que les barreaux transversaux (1) présentent une section ronde et sont aplatis à leurs extrémités (1.1).

3. Support de câbles selon la revendication 1,
caractérisé
en ce que les barreaux transversaux (8) sont aplatis à leurs extrémités (8.1) et sont contre-coudés vers le haut sur une distance (b).

4. Support de câbles selon la revendication 1,
caractérisé
en ce que les barreaux transversaux (9) sont pliés ou bombés vers le haut.

5. Support de câbles selon la revendication 4,
caractérisé
en ce que les parois latérales (2) sont reliées entre elles par des tirants (10) en supplément des barreaux transversaux (9).

6. Support de câbles selon la revendication 5,
caractérisé
en ce que les tirants sont constitués par des bandes de tôle d'acier.

7. Support de câbles selon la revendication 1,
caractérisé
en ce que les barreaux transversaux (1, 8, 9) sont faits d'acier rond galvanisé.

8. Support de câbles selon la revendication 1,
caractérisé
en ce que les barreaux transversaux (14) sont constitués par des bandes de tôle d'acier profilées en forme de U ou de V, dont les extrémités (14.1) sont plates.

9. Support de câbles selon la revendication 1,
caractérisé
en ce que la déformation à la presse à estamper est réalisée à froid.

10. Support de câbles selon la revendication 2, 3 ou 8,
caractérisé
en ce que les barreaux transversaux (1, 8, 9, 14) sont appuyés par leurs extrémité plates (1.1, 8.1, 9.1, 14.1) sur les branches horizontales (3) des parois latérales (2).

11. Support de câbles selon la revendication 1,
caractérisé
en ce que les barreaux transversaux (11) présentent une section ronde et des extrémités (11.1) pliées latéralement.

12. Support de câbles selon la revendication 11,
caractérisé
en ce que les barreaux transversaux (11) sont pliés à un angle de 90° à leurs extrémités.

13. Support de câbles selon la revendication 1,
caractérisé
en ce que les barreaux transversaux (11) sont fixés par des étriers de serrage multiples (12) reposant au-dessus des branches horizontales (3) des parois latérales (2), les extrémités déformées (11.1) étant guidées avec formation d'une liaison par complémentarité de forme dans des évidements (12.1) des étriers de serrage multiples (12) et les étriers de serrage multiples (12) étant assemblés rigidement aux branches horizontales (3) au moyen d'une déformation à la presse à estamper ou par des rivets.

14. Support de câbles selon la revendication 1,
caractérisé
en ce que les écartements (a) des barreaux transversaux sont adaptés à la flexibilité des plus légers des câbles à poser.

15. Support de câbles selon la revendication 1,
caractérisé
en ce que les parois latérales sont fabriquées en tôle d'acier et présentent un bourrelet raidisseur (6) au bord supérieur de leur branche (5) dirigée verticalement.

16. Support de câbles selon la revendication 15,
caractérisé
en ce que les branches (5) dirigées verticalement forment un angle légèrement obtus avec les branches (3) dirigées horizontalement.

17. Support de câbles selon la revendication 1,
caractérisé
en ce que les barreaux transversaux sont munis d'un lubrifiant.
